# EUROPEAN PATENT SPECIFICATION

(11) **EP 2 670 803 B1**
(45) Date of publication and mention of the grant of the patent: **22.11.2017**
(21) Application number: 12703233.2
(22) Date of filing: 17.01.2012
(51) Int. Cl.: C08L 67/06, C09D 167/06

(54) **SCRATCH RESISTANT GELCOAT**
KRATZFESTE GELBESCHICHTUNG
ENDUIT GÉLIFIÉ RÉSISTANT À LA RAYURE

(30) Priority: 02.02.2011 EP 11000808
(43) Date of publication of application: 11.12.2013
(73) Proprietor: Ashland Licensing And Intellectual Property, LLC, Dublin, OH 43017 (US)
(72) Inventor: JÄRVENTAUSTA, Aki llmari, FIN-Lahti 15800 (FI); NISSILÄ, Pirjo, FIN-02940 Espoo (FI)
(74) Representative: Bülle, Jan
(86) International application number: PCT/EP2012/000177
(87) International publication number: WO 2012/104020

(56) References cited:
- EP-A2- 0 400 884
- GB-A- 768 902
- KR-B1- 100 895 973
- US-A1- 2009 306 277
- US-B1- 6 314 906
- DATABASE WPI Week 201004 Thomson Scientific, London, GB; AN 2009-J11737 XP002645481, & KR 100 895 973 B1 (BAUM ARCHITECTS ENGINEERS CONSULTANTS) 7 May 2009 (2009-05-07)

## Description

The invention relates to a method for the preparation of a gelcoated substrate comprising the steps of applying a first gelcoat composition comprising a reactive polyester resin a particulate inorganic filler and a reactive diluent and applying a second gelcoat composition to suitable substrates such as sanitary basins, e.g. sinks, washbasins, spas, shower basins, lavatories, table tops and counter tops ,and the like. The solidified gelcoat provides excellent scratch resistance to the surface of the substrate.

Gelcoats are commonly applied to surfaces of substrates, for example fibrous reinforced composites, to provide a durable surface layer having attractive appearance. Typically, a gelcoat is applied to the release surface of a mold corresponding to the desired final shape and surface finish of the substrate to be coated. Additional layers, such as fiber reinforced resins, are then applied to the gelcoat. Following curing, the substrate is removed from the mold and the gelcoat provides the final finished surface of the article.

Gelcoats compete with ceramic and solid surface materials in sanitary basins. Ceramic surfaces are superior in scratch resistance and solid surface materials have the advantage of reduced gloss by nature - scratches are not as visible as in glossy gelcoats. Thus, there is a demand for gelcoats having an improved scratch resistance.

DE 197 25 984 discloses a process for the manufacture of acrylic surfaces having improved wear and scratch resistance. A gelcoat containing nanoparticles is applied to a mold. Subsequently, the mold is filled with a liquid acrylate prepolymer which is allowed to cure thereby providing an acrylic article covered with a gelcoat.

US 6,314,906 describes a multilayered fiberglass boat structure, which includes a plurality of layers of resin impregnated fiberglass reinforcement and a plurality of layers of a polyester film. Each film layer is formed from a gelcoat, with at least one of the film layers formed from a gelcoat that includes iridescent polyester particles.

KR 100895973 discloses a method of constructing parking-lot floor by the following steps: A primer layer is formed by coating acrylic resin, polyacrylate, polyurethane, polyolefin and/or silicone resin and drying. An intermediate layer is formed on the primer layer by agitating primary gel coat, fiber material, promoter and hardener in a hand mixing machine and using a sponge roller. An upper layer is formed on the intermediate layer by agitating secondary gel coat, secondary fiber material, secondary promoter, charcoal, secondary hardener in a hand mixing machine and using a sponge roller.

US 6,314,906 relates to a multilayered fiberglass boat structure, wherein the fiberglass boat structure includes a plurality of layers of resin impregnated fiberglass reinforcement and a plurality of layers of a polyester film. Each film layer is formed from a gelcoat, with at least one of the film layers formed from a gelcoat that includes iridescent polyester particles.

US 2009/0306277 discloses a resin system comprising a crosslinkable resin, a reactive diluent, and a plurality of reactive, surface-modified nanoparticles. The resin system can be included in a gelcoat.

WO 2009/152296 discloses end-capped, surface modified silica nanoparticles that can be included in a resin system. The resins system can be applied as a gelcoat to a fibrous composite substrate.

GB 768,902 discloses quick-hardening spreadable masses and methods of using same. The quick-hardening spreadable mass comprises a binding agent, a polymerization accelerator and a filler.

KR 100 895973 and Thomson Scientific Database XP 002645481 relate to a method for the construction of a parking lot floor, the method comprising forming a primer layer an intermediate layer and an upper layer. The intermediate layer can be a gel coat comprising an unsaturated polyester resin, titanium dioxide and styrene monomer. The upper layer further comprises 2-hydroxy-4-benzophenone and paraffin wax.

EP 0 400 884 discloses styrene-soluble unsaturated polyesters useful for the preparation of improved gel coats wherein the diol component comprises from 10 to 100 mole percent 2-methyl-1,3-propanediol.

It is an object of the invention to provide gelcoats having advantages to the gelcoats of the prior art. In particular, the gelcoats should exhibit excellent scratch resistance, thermal shock resistance, unbrittleness, sandability, polishability, and the like and should be inexpensive.

This object has been achieved by the subject-matter of the patent claims.

The invention is directed to a method for the preparation of a gelcoated substrate comprising the steps of
(a) applying a first gelcoat composition comprising
   - a reactive polyester resin system comprising a polyol and a carboxylic acid, a carboxylic acid ester and/or carboxylic acid anhydride;
   - a particulate inorganic filler at a content of at least 0.001 wt.-%, relative to the total weight of the gelcoat composition; and
   - a reactive diluent
   a substrate; wherein the substrate is a sanitary basin selected from the group consisting of sinks, washbasins, spas, shower basins and lavatories, or a surface selected from the group selected of table tops and counter tops;
(a₂) applying a second gelcoat composition differing from the gelcoat composition applied in step (a);
(b) allowing the first gelcoat composition solidify; and
(b₂) allowing the second gelcoat composition solidify.

Preferably, the invention is directed to the use of the first and the second gelcoat composition of the invention for providing a gelcoat to the surface of a substrate.

In another aspect, the invention is directed to a gelcoated substrate obtainable by the method of the invention.

As used herein, the term "gelcoat composition" refers to a coating composition to be used for coating a substrate wherein the substrate is a sanitary basin selected from the group consisting of sinks, washbasins, spas, shower basins and lavatories, or a surface selected from the group selected of table tops and counter tops. The term "gelcoat composition" preferably refers to a composition, which can be cured. The term "gelcoat composition" also includes compositions, which can be cured with a filler incorporated therein. More preferably, the prefix "gel" may be interpreted as to that the gelcoat composition comprises colloidal dispersed particles of a filler.

As used herein, the term "polyester resin system" refers to a component of the gelcoat composition, which comprises the major reactive elements that co-react to form the final solidified gelcoat.

As used herein, the terms "carboxylic acid", "carboxylic acid ester" and "carboxylic acid anhydride" include mono- and polycarboxylic acids and the esters and anhydrides thereof, respectively.

As used herein, the term "particulate filler" refers to a component of the gelcoat composition, which is preferably colloidal dispersed in the polyester resin system without having reacted with the polyester resin system.

As used herein, the term "reactive diluent" refers to a component of the gelcoat composition, which is preferably capable of reacting with the polyester resin system to form a copolymerized network.

As used herein, the expression "applying the gelcoat composition to a substrate" refers to contacting the gelcoat composition with the substrate, for example by spraying the gelcoat composition on the substrate. In this context, "sprayable" is descriptive of the viscosity of the gelcoat composition, which is defined as not too viscous for spraying.

As used herein, the expression "allowing the gelcoat composition to solidify" refers to curing the gelcoat composition by forming a copolymerized network of the polyester resin system and the diluents, wherein the particulate inorganic filler is incorporated.

As used herein, specific values for parameters and ranges are to be interpreted within a certain margin known to a person skilled in the art.

The reactive polyester resin systems useful in the gelcoat composition of the invention include reactive unsaturated polyester resins and vinyl ester resins.

In a preferred embodiment, the reactive polyester resin system is a reactive unsaturated polyester resin system comprising a polyol and a carboxylic acid, a carboxylic acid ester and/or a carboxylic acid anhydride. Preferably, the unsaturated polyester resin comprises a polyol and a polycarboxylic acid, a polycarboxylic acid ester and/or a polycarboxylic acid anhydride, i.e. the unsaturated polyester resin is the condensation product of one or more polycarboxylic acids, polycarboxylic acid esters and/or polycarboxylic acid anhydrides with one or more polyols. More preferably, the unsaturated polyester resin comprises a polyol and a polycarboxylic acid and/or a polycarboxylic acid anhydride, i.e. the unsaturated polyester resin is the condensation product of one or more polycarboxylic acids and/or polycarboxylic acid anhydrides with one or more polyols.

In another preferred embodiment, the reactive unsaturated polyester resin system comprises a carboxylic acid, a carboxylic acid ester and/or a carboxylic acid anhydride, wherein the carboxylic acid, the carboxylic acid ester and/or the carboxylic acid anhydride are/is selected from aliphatic and aromatic polycarboxylic acids and/or the esters and anhydrides thereof, wherein the term "aliphatic" covers acyclic and cyclic, saturated and unsaturated polycarboxylic acids and the esters and anhydrides thereof. Preferably, the carboxylic acid, the carboxylic acid ester and/or the carboxylic acid anhydride are/is selected from unsaturated and aromatic polycarboxylic acids and/or the esters and anhydrides thereof. More preferably, the carboxylic acid, the carboxylic acid ester and/or the carboxylic acid anhydride are/is selected from unsaturated polycarboxylic acids and/or the esters and anhydrides thereof.

In another preferred embodiment, the reactive unsaturated polyester resin system comprises a carboxylic acid, a carboxylic acid ester and/or a carboxylic acid anhydride, wherein the carboxylic acid, the carboxylic acid ester and/or the carboxylic acid anhydride are/is selected from unsaturated polycarboxylic acids and/or the esters and anhydrides thereof, and used in combination with a second carboxylic acid, carboxylic acid ester and/or carboxylic acid anhydride, which are/is selected from aliphatic and/or aromatic polycarboxylic acids and/or the esters and anhydrides thereof. Preferably, the carboxylic acid, the carboxylic acid ester and/or the carboxylic acid anhydride are/is selected from unsaturated polycarboxylic acids and/or the esters and anhydrides thereof, and used in combination with a second carboxylic acid, carboxylic acid ester and/or carboxylic acid anhydride, which are/is selected from saturated and/or aromatic polycarboxylic acids and/or the esters and anhydrides thereof. More preferably, the carboxylic acid, the carboxylic acid ester and/or the carboxylic acid anhydride are/is selected from unsaturated polycarboxylic acids and/or the esters and anhydrides thereof, and used in combination with a second carboxylic acid, carboxylic acid ester and/or carboxylic acid anhydride, which are/is selected from aromatic polycarboxylic acids and/or the esters and anhydrides thereof. Even more preferably, the carboxylic acid, the carboxylic acid ester and/or the carboxylic acid anhydride are/is selected from unsaturated polycarboxylic acids and/or the esters and anhydrides thereof, and used in combination with a second carboxylic acid, carboxylic acid ester and/or carboxylic acid anhydride, which are/is selected from aromatic polycarboxylic acids and/or the esters and anhydrides thereof, wherein the second carboxylic acid, carboxylic acid ester and/or carboxylic acid anhydride have/has a limited weight proportion in the reactive unsaturated polyester resin system compared to the carboxylic acid, the carboxylic acid ester and/or the carboxylic acid anhydride selected from unsaturated polycarboxylic acids and/or the esters and anhydrides thereof, the weight ratios (second carboxylic acid, carboxylic acid ester and/or carboxylic acid anhydride : carboxylic acid, the carboxylic acid ester and/or the carboxylic acid anhydride selected from unsaturated polycarboxylic acids and/or the esters and anhydrides thereof) being less than 0.8:1, preferably less than 0.5:1, more preferably less than 0.2:1, even more preferably less than 0.1 :1, and most preferably less than 0.05:1.

The use of the saturated and/or aromatic polycarboxylic acids, polycarboxylic acid esters and/or polycarboxylic acid anhydrides in combination with unsaturated polycarboxylic acids, polycarboxylic acid esters and/or polycarboxylic acid anhydrides may serve to decrease the crosslink density after curing of the resin, and consequently the resin will typically be more flexible, shock resistant, unbrittle, and the like.

In another preferred embodiment, the reactive unsaturated polyester resin system comprises a carboxylic acid, a carboxylic acid ester and/or a carboxylic acid anhydride, wherein the carboxylic acid, the carboxylic acid ester and/or the carboxylic acid anhydride are/is exclusively selected from unsaturated polycarboxylic acids and/or the esters and anhydrides thereof, and a combined use with another carboxylic acid, carboxylic acid ester and/or carboxylic acid anhydride is excluded. Preferably, the unsaturated polyester resin system exclusively comprises an unsaturated polycarboxylic acid, an unsaturated polycarboxylic acid ester or an unsaturated polycarboxylic acid anhydride. More preferably, the unsaturated polyester resin system exclusively comprises an unsaturated polycarboxylic acid or an unsaturated polycarboxylic acid anhydride. Most preferably, the unsaturated polyester resin system exclusively comprises an unsaturated polycarboxylic acid anhydride.

The exclusive use of unsaturated polycarboxylic acids, polycarboxylic acid esters and/or polycarboxylic acid anhydrides typically results in a high crosslink density after curing, and consequently in a high resin stability.

Exemplary unsaturated polycarboxylic acids include chloromaleic acid, citraconic acid, fumaric acid, itaconic acid, maleic acid, mesaconic acid, and methyleneglutaric acid. Preferred unsaturated polycarboxylic acids are fumaric acid, itaconic acid, maleic acid and mesaconic acid. More preferred unsaturated polycarboxylic acids are fumaric acid and maleic acid. The most preferred unsaturated polycarboxylic acid is maleic acid.

Exemplary unsaturated polycarboxylic acid esters can be derived from chloromaleic acid, citraconic acid, fumaric acid, itaconic acid, maleic acid, mesaconic acid, and methyleneglutaric acid. Preferred unsaturated polycarboxylic acids are fumaric acid, itaconic acid, maleic acid and mesaconic acid.

Exemplary unsaturated polycarboxylic acid anhydrides can be derived from chloromaleic acid, citraconic acid, fumaric acid, itaconic acid, maleic acid, mesaconic acid, and methyleneglutaric acid. Preferred unsaturated polycarboxylic acid anhydrides are the unsaturated polycarboxylic acid anhydrides of chloromaleic acid, maleic acid, citraconic acid, and itaconic acid. More preferred unsaturated polycarboxylic acid anhydrides are maleic anhydride, citraconic anhydride, and itaconic anhydride. The most preferred unsaturated polycarboxylic acid anhydride is maleic anhydride.

Exemplary saturated polycarboxylic acids include adipic acid, chlorendic acid, dihydrophthalic acid, dimethyl-2,6-naphthenic dicarboxylic acid, d-methyl glutaric acid, dodecanedicarboxylic acid, glutaric acid, hexahydrophthalic acid, nadic acid, pimelic acid, sebacic acid, succinic acid, tetrahydrophthalic acid, 1,2-cyclohexane dicarboxylic acid, 1,3-cyclohexane dicarboxylic acid, 1,4-cyclohexane dicarboxylic acid, and Diels-Alder adducts made from maleic anhydride and cyclopentadiene. Preferred saturated polycarboxylic acids are succinic acid, glutaric acid, d-methyl glutaric acid, adipic acid, sebacic acid, and pimelic acid. More preferred saturated polycarboxylic acids are adipic acid, succinic acid, and glutaric acid.

Exemplary saturated polycarboxylic acid esters can be derived from adipic acid, chlorendic acid, dihydrophthalic acid, dimethyl-2,6-naphthenic dicarboxylic acid, d-methyl glutaric acid, dodecanedicarboxylic acid, glutaric acid, hexahydrophthalic acid, nadic acid, pimelic acid, sebacic acid, succinic acid, tetrahydrophthalic acid, 1,2-cyclohexane dicarboxylic acid, 1,3-cyclohexane dicarboxylic acid, 1,4-cyclohexane dicarboxylic acid, and Diels-Alder adducts made from maleic anhydride and cyclopentadiene.

Exemplary saturated polycarboxylic acid anhydrides can be derived from adipic acid, chlorendic acid, dihydrophthalic acid, dimethyl-2,6-naphthenic dicarboxylic acid, dimethylglutaric acid, dodecanedicarboxylic acid, glutaric acid, hexahydrophthalic acid, nadic acid, pimelic acid, sebacic acid, succinic acid, tetrahydrophthalic acid, 1,2-cyclohexane dicarboxylic acid, 1,3-cyclohexane dicarboxylic acid, 1,4-cyclohexane dicarboxylic acid, and Diels-Alder adducts made from maleic anhydride and cyclopentadiene. Preferred saturated polycarboxylic acid anhydrides are the saturated polycarboxylic acid anhydrides of chlorendic acid, dihydrophthalic acid, dimethylglutaric acid, glutaric acid, hexahydrophthalic acid, nadic acid, succinic acid, tetrahydrophthalic acid. More preferred saturated polycarboxylic acid anhydrides are dihydrophthalic anhydride, hexahydrophthalic anhydride, tetrahydrophthalic anhydride, and succinic anhydride.

Exemplary aromatic polycarboxylic acids include isophthalic acid, phthalic acid, terephthalic acid, tetrachlorophthalic acid, trimellitic acid, 1,2,4,5-benzenetetracarboxylic acid, and 1,2,4-benzenetricarboxylic acid. Preferred aromatic polycarboxylic acids are isophthalic acid, phthalic acid, terephthalic acid, and tetrachlorophthalic acid. More preferred aromatic polycarboxylic acids are isophthalic acid, and phthalic acid. The most preferred aromatic polycarboxylic acid is isophthalic acid.

Exemplary aromatic polycarboxylic acid esters can be derived from isophthalic acid, phthalic acid, terephthalic acid, tetrachlorophthalic acid, trimellitic acid, 1,2,4,5-benzenetetracarboxylic acid, and 1,2,4-benzenetricarboxylic acid.

Exemplary aromatic polycarboxylic acid anhydrides can be derived from isophthalic acid, phthalic acid, terephthalic acid, tetrachlorophthalic acid, trimellitic acid, 1,2,4,5-benzenetetracarboxylic acid, and 1,2,4-benzenetricarboxylic acid. Preferred aromatic polycarboxylic acid anhydrides are the aromatic polycarboxylic acid anhydrides of phthalic acid and tetrachlorophthalic acid. The most preferred aromatic polycarboxylic acid anhydride is phthalic anhydride.

In another preferred embodiment, the reactive unsaturated polyester resin system comprises a blend of a carboxylic acid, a carboxylic acid ester and/or a carboxylic acid anhydride, wherein the carboxylic acid, the carboxylic acid ester and/or the carboxylic acid anhydride are/is selected from aliphatic and aromatic dicarboxylic acids and/or the esters and anhydrides thereof, wherein the term "aliphatic" covers acyclic and cyclic, saturated and unsaturated dicarboxylic acids and the esters and anhydrides thereof. Preferably, a first carboxylic acid, the carboxylic acid ester and/or carboxylic acid anhydride are/is selected from unsaturated dicarboxylic acids and/or esters and anhydrides thereof, and is used in combination with a second carboxylic acid, carboxylic acid ester and/or carboxylic acid anhydride, which are/is selected from saturated and/or aromatic polycarboxylic acids and/or the esters and anhydrides thereof. More preferably, a first carboxylic acid and/or a carboxylic acid anhydride selected from fumaric acid, maleic acid, and maleic anhydride is used in combination with a second carboxylic acid and/or carboxylic acid anhydride selected from isophthalic acid, phthalic acid, terephthalic acid, and phthalic anhydride. More preferably, maleic anhydride is used in combination with isophthalic acid.

In another preferred embodiment, the reactive polyester resin system further comprises a monocarboxylic acid. Preferably, the reactive polyester resin system comprises the monocarboxylic acid in amounts from 0.01 wt.-% to 10 wt.-%, more preferably from 0.01 wt.-% to 2 wt.-%, relative to the reactive polyester resin system. Exemplary monocarboxylic acids include acrylic acid, benzoic acid, ethylhexanoic acid, and methacrylic acid. Preferred monofunctional carboxylic acids are acrylic acid and methacrylic acid.

In another preferred embodiment, the polyol is selected from aliphatic and aromatic polyols, wherein the term "aliphatic" covers acyclic and cyclic, saturated and unsaturated polyols. Preferably, the polyol is selected from aliphatic polyols. More preferably, the polyols are selected from aliphatic polyols having from 2 to 12 carbon atoms. Still more preferably, the polyols are selected from diols having from 2 to 10 carbon atoms, most preferably from diols having 3, 4, 6, 7, 8, 9 or 10 carbon atoms. It is particularly preferred that the polyol is a diol having 3 carbon atoms.

Exemplary diols include alkanediols, butane-1,4-diol, 2-butyl-2-ethyl-1,3-propanediol (BEPD), 1,3-butylene glycol, butane-1,4-diol, cyclohexane-1,2-diol, cyclohexane dimethanol, diethylenglycol, 2,2-dimethyl-1,4-butanediol, 2,2-dimethylheptanediol, 2,2-dimethyloctane-diol, 2,2-dimethylpropane-1,3-diol, dipentaerythritol, dipropylene glycol, di-trimethylol-propane, ethyleneglycol, hexane-1,6-diol, 2-methyl-1,3-propanediol, neopentyl glycol, 5-norbornene-2,2-dimethylol, 2,3-norbornene diol, oxa-alkanediols, pentaerythritol, poly-ethylenepropane-3-diol, 1,2-propanediol, 1,2-propyleneglycol, triethyleneglycol, trimethylol-propane, tripentaerythirol, 2,2,4-trimethyl-1,3-pentanediol, and 2,2-bis(p-hydroxycyclohexyl)-propane.

In a preferred embodiment, the polyol is a diol selected from the group consisting of butane-1,4-diol, 2-butyl-2-ethyl-1,3-propanediol (BEPD), 1,3-butylene glycol, cyclohexane-1,2-diol, cyclohexane dimethanol, diethylenglycol, 2,2-dimethyl-1,4-butanediol, 2,2-dimethylheptanediol, 2,2-dimethyloctanediol, 2,2-dimethylpropane-1,3-diol, dipentaerythritol, dipropylene glycol, di-trimethylolpropane, hexane-1,6-diol, 2-methyl-1,3-propanediol, 5-norbornene-2,2-dimethylol, 2,3-norbornene diol, oxa-alkanediols, pentaerythritol, polyethylene glycol, propane-3-diol, 1,2-propanediol (also called 1,2-propyleneglycol), triethyleneglycol, trimethylolpropane, tripentaerythritol, 2,2,4-trimethyl-1,3-pentanediol, and 2,2-bis(p-hydroxycyclohexyl)-propane. More preferably, the polyol is selected from the group consisting of 1,2-propanediol (1,2-propylene glycol), dipropylene glycol, and cyclohexane-1,2-diol. Still more preferably, the polyol is selected from 1,2-propanediol (1,2-propylene glycol) and dipropylene glycol. It is particularly preferred that the polyol is 1,2-propanediol (1,2-propylene glycol), dipropylene glycol or a combination thereof. Most preferably, the polyol is 1,2-propanediol (1,2-propylene glycol).

In another preferred embodiment, the reactive polyester resin system further comprises a monofunctional alcohol. Preferably, the reactive polyester resin system comprises the monofunctional alcohol in amounts from 0.01 wt.-% to 10 wt.-%, more preferably from 0.01 wt.-% to 2 wt.-%, relative to the reactive polyester resin system. Exemplary monofunctional alcohols include benzyl alcohol, cyclohexanol, 2-ethyhexyl alcohol, 2-cyclohexyl ethanol, and lauryl alcohol.

In a preferred embodiment, the reactive polyester resin system according to the invention comprises a diol selected from the group consisting of butane-1,4-diol, 2-butyl-2-ethyl-1,3-propanediol (BEPD), 1,3-butylene glycol, cyclohexane-1'2-diol, cyclohexane dimethanol, diethylenglycol, 2,2-dimethyl-1,4-butanediol, 2,2-dimethylheptanediol, 2,2-dimethyloctanediol, 2,2-dimethylpropane-1,3-diol, dipentaerythritol, dipropylene glycol, di-trimethylolpropane, hexane-1,6-diol, 2-methyl-1,3-propanediol, 5-norbornene-2,2-dimethylol, 2,3-norbornene diol, oxa-alkanediols, pentaerythritol, polyethylene glycol, propane-3-diol, 1,2-propanediol (also called 1,2-propyleneglycol), triethyleneglycol, trimethylolpropane, tripentaerythritol, 2,2,4-trimethyl-1,3-pentanediol, and 2,2-bis(p-hydroxycyclohexyl)-propane, and a carboxylic acid, a carboxylic acid ester and/or a carboxylic acid anhydride. More preferably, the reactive polyester resin system according to the invention comprises 1,2-propanediol (also called 1,2-propyleneglycol), dipropylene glycol or a combination thereof as a diol, and a carboxylic acid, a carboxylic acid ester and/or a carboxylic acid anhydride. Most preferably, the reactive polyester resin system according to the invention comprises 1,2-propanediol (1,2-propylene glycol), and a carboxylic acid, a carboxylic acid ester and/or a carboxylic acid anhydride.

In another preferred embodiment, the reactive polyester resin system is a condensation product of one of the above mentioned exemplary polycarboxylic acids, esters and/or anhydrides thereof with one of the above mentioned exemplary diols. Preferably, the reactive polyester resin system is a condensation product of maleic anhydride and 1 ,2-propylene glycol. More preferably, the reactive polyester resin system is a condensation product of maleic anhydride and 1 ,2-propylene glycol in a weight ratio of (1±0.9):1, preferably (1±0.5):1, more preferably (1±0.3):1, even more preferably (1±0.1 ):1 , and most preferably 1 :1. For example, a reactive polyester resin system based on maleic anhydride and 1 ,2-propylene glycol is available from Ashland Inc. (Dublin, Ohio, U.S.A) under the trade name AROPOL® D 1691.

In another preferred embodiment, the reactive polyester resin system is a condensation product of one or more of the above mentioned exemplary polycarboxylic acids, esters and/or anhydrides thereof with one or more of the above mentioned exemplary diols. Preferably, the reactive polyester resin system is a condensation product of one or more of the above mentioned exemplary polycarboxylic acids, esters and/or anhydrides thereof with one or more of the above mentioned exemplary diols. More preferably, the reactive polyester resin system is a condensation product of a blend of one of the above mentioned exemplary polycarboxylic acids and one of the above mentioned exemplary polycarboxylic acid anhydrides with a blend of two of the above mentioned exemplary diols. Still more preferably, the reactive polyester resin system is a condensation product of a blend of one of the above mentioned exemplary aromatic polycarboxylic acids and one of the above mentioned exemplary unsaturated polycarboxylic acid anhydrides with a blend of two of the above mentioned exemplary diols. Yet more preferably, the reactive polyester resin system is a condensation product of a blend of isophthalic acid and maleic anhydride with a blend of 1,2-propane diol and dipropylene glycol. For example, a reactive polyester resin system based on a blend of isophthalic acid and maleic anhydride and a blend of 1,2-propane diol and dipropylene glycol is available from Ashland Inc. (Dublin, Ohio, U.S.A) under the trade name AROPOL® K 530.

In another preferred embodiment, a combination of two reactive polyester systems is employed as the reactive polyester resin system. Preferably, a combination of a reactive polyester resin system based on maleic anhydride and 1,2-propylene glycol, and a reactive polyester resin system based on a blend of isophthalic acid and maleic anhydride and a blend of 1,2-propane diol and dipropylene glycol is used. For example, a combination of AROPOL® D 1691 and AROPOL® K 530 may be used.

In a preferred embodiment, the reactive polyester resin system according to the invention comprises
- a first polycarboxylic acid or anhydride PC₁ and a first polyol PO₁;
- a second polycarboxyylic acid or anhydride PC₂ and a second polyol PO₂;
- optionally, a first monocarboxylic acid or anhydride MC₁ and/or a first monofunctional alcohol MO₁; and
- optionally, a second monocarboxylic acid or anhydride MC₂ and/or a second monofunctional alcohol MO₂;
- optionally, a third polyol PO₃;
wherein the first and second polycarboxylic acid or anhydride PC₁ and PC₂, respectively, as well as the first, second and third polyol PO₁, PO₂ and PO₃, respectively, as well as the first and second monocarboxylic acid MC₁ and MC₂, respectively, as well as the first and second monofunctional alcohol MO₁ and MO₂, respectively, are independently of one another defined as above.

Preferably, the reactive polyester resin system according to the invention comprises
- a first dicarboxylic acid or anhydride PC₁ and a first diol PO₁;
- a second dicarboxyylic acid or anhydride PC₂ and a second diol PO₂;
- optionally, a first monocarboxylic acid or anhydride MC₁ and/or a first monofunctional alcohol MO₁; and
- optionally, a second monocarboxylic acid or anhydride MC₂ and/or a second monofunctional alcohol MO₂;
- optionally, a third diol PO₃;
wherein the first and second dicarboxylic acid or anhydride PC₁ and PC₂, respectively, as well as the first, second and third diol PO₁, PO₂ and PO₃, respectively, as well as the first and second monocarboxylic acid MC₁ and MC₂, respectively, as well as the first and second monofunctional alcohol MO₁ and MO₂, respectively, are independently of one another defined as above.

Typically, the first components are not only capable of reacting with one another but also with the second components. For example, PC₂ is typically capable of reacting with PO₁, PO₂ and the optionally present MO₁ and MO₂, respectively.

In a preferred embodiment, the total molar content of reactive alcohol groups RAG and the total molar content of reactive carboxylic acid or anhydride groups RCG is within the range of from 0.7:1 to 1:0.7, more preferably from 0.8:1 to 1:0.8, most preferably from 0.9:1 to 1:0.9, and in particular 1:1.

Preferred embodiments E¹ to E⁸ of the reactive polyester resin system according to the invention are summarized in the table here below:

| | E¹ | E² | E³ | E⁴ | E⁵ | E⁶ | E⁷ | E⁸ |
|---|---|---|---|---|---|---|---|---|
| PC₁ | >5% | >10% | >10% | >20% | >30% | >40% | 15-35 | 20-30 |
| PO₁ | >5% | >10% | >10% | >20% | >30% | >40% | 15-35 | 20-30 |
| PC₂ | <50% | <40% | <40% | <30% | <20% | <10% | 15-35 | 20-30 |
| PO₂ | <30% | <20% | <20% | <15% | <10% | <5% | 7.5-17.5 | 5-15 |
| PO₃ | <30% | <20% | <20% | <15% | <10% | <5% | 7.5-17.5 | 5-15 |
| MC₁ | ≥0 | 0-20 | 0-5 | 0-5 | 0-5 | 0 | 0-5 | 0 |
| MO₁ | ≥0 | 0-20 | 0-5 | 0-5 | 0-5 | 0 | 0-5 | 0 |
| MC₂ | ≥0 | 0-20 | 0-5 | 0-5 | 0-5 | 0 | 0-5 | 0 |
| MO₂ | ≥0 | 0-20 | 0-5 | 0-5 | 0-5 | 0 | 0-5 | 0 |

The ranges in the above table are to be interpreted within a certain margin known to a person skilled in the art.

In particularly preferred embodiments, PO₁, PC₁, PO₂, PO₃, and PC₂ have the following meanings:
PO₁ = 1,2-propylene glycol
PC₁ = maleic anhydride
PO₂ = dipropylene glycol
PO₃ = 1,2-propane diol
PC₂ = isophthalic acid

It has been surprisingly found that the combination of first and second components, optionally in the presence of third components, i.e. a complex mixture of reactive constituents of the reactive polyester resin, can substantially improve the final properties of the gelcoat, particularly with respect to scratch resistance at reduced brittleness, thermal shock resistance, polishing properties, sandability, and the like.

In another preferred embodiment, the reactive polyester resin system is a modified unsaturated polyester resin system. Exemplary, the modified unsaturated polyester resin system may be formed by reacting an oligoester having a weight average molecular weight of 200 to 4,000 with a diisocyanate and a hydroxyalkyl(meth)acrylate to provide a urethane acrylate having terminal vinyl groups.

In a preferred embodiment, the reactive polyester resin system is a reactive vinyl ester resin system. Preferably, the vinyl ester resin system comprises a polyol, which is an epoxy resin, and a carboxylic acid, a carboxylic acid ester and/or carboxylic acid anhydride, which are/is an ethylenically unsaturated monocarboxylic acid, an ester and/or an anhydride thereof. Exemplary epoxy resins include bisphenol A diglycidal ether. Exemplary monocarboxylic acids include acrylic acid and methacrylic acids. Examples of acceptable vinyl ester resins include the DERAKANE® vinyl ester resin products available through Ashland Inc. (Dublin, Ohio, U.S.A). Other types of vinyl esters resin systems include those based on cycloaliphatic and/or linear aliphatic diepoxides. Examples of cycloaliphatic vinyl esters include those prepared using hydrogenated bisphenol A and cyclohexane. Examples of linear aliphatic vinyl esters include those prepared from neopentyl, propylene, dipropylene, polypropylene, polyethylene, and diethylene glycol diepoxides.

In another preferred embodiment, the reactive polyester resin systems used in the gelcoat compositions can be prepared by techniques familiar to those skilled in the art. For example, the unsaturated polyester resins useful in the gelcoat compositions described herein can be prepared by common esterification techniques, wherein the carboxylic acid and/or corresponding ester and/or anhydride is reacted with a polyol, usually in the presence of a catalyst, to a predetermined acid number. The unsaturated polyester can also be modified to contain urethane acrylate vinyl groups. Examples of such modifications are disclosed in U.S. Published Application 2007/0001343 the text of which is incorporated by reference herein in its entirety.

In another preferred embodiment, the reactive polyester resin system is contained in the gelcoat composition in an amount of 20 to 95 wt.-%, preferably 20 to 70 wt.-%, more preferably at a content of 30 to 60 wt.-%, and most preferably 40 to 50 wt.-%, relative to the total weight of the gelcoat composition.

The gelcoat composition of the invention further comprises a particulate inorganic filler at a content of at least 0.001 wt.-%, relative to the total weight of the gelcoat composition, preferably at a content of 0.0001 to 85 wt.-%, more preferably at a content of 0.1 to 75 wt.-%, still more preferably at a content of 0.5 to 70 wt.-%, yet more preferably at a content of 1.0 to 65 wt.-%, most preferably at a content 2.5 to 60 wt.-%, and in particular at a content of 4.0 to 50 wt.-%.

In a preferred embodiment, the gelcoat composition comprises the particulate inorganic filler at a content of 5.0 to 40 wt.-%, relative to the total weight of the gelcoat composition, preferably at a content of 8.0 to 35 wt.-%, more preferably at a content of 10 to 30 wt.-%, still more preferably at a content of 10 to 25 wt.-%, yet more preferably at a content of 10 to 23 wt.-%, most preferably at a content of 13±2 or 20±3 wt.-%.

In a preferred embodiment, the particulate inorganic filler is a micro or a nano scale filler. The particulate inorganic filler may either comprise particles, wherein the particle size distribution is in the range of 0.5 to 80 µm, preferably in the range of 0.5 to 50 µm, more preferably in the range of 1 to 20 µm, and most preferably in the range of 3 to 15 µm, or particles, wherein the particle size distribution is in the range of 10 to 500 nm, more preferably in the range of 80 to 300 nm, still more preferably in the range of 100 to 250 nm, and most preferably in the range of 150 to 200 nm, or combinations thereof.

In case that the particulate inorganic filler comprises particles with a particle size distribution in the range of 0.5 to 80 µm, the particulate inorganic filler is preferably present in an amount of 10 to 35 wt.-%, more preferably in an amount of 12 to 30 wt.-%, and most preferably in an amount of 15 to 25 wt.-%, relative to the total weight of the gelcoat composition.

In case that the particulate inorganic filler comprises particles with a particle size distribution in the range of 80 to 500 nm, the particulate inorganic filler is preferably present in an amount of 10 to 20 wt.-%, more preferably in an amount of 10 to 18 wt.-%, and most preferably in an amount of 12 to 15 wt.-%, relative to the total weight of the gelcoat composition.

In another preferred embodiment, the particulate inorganic filler comprises particles having a particle size of more than 0.5 µm. More preferably, the particulate inorganic filler comprises particles, wherein the particle size is in the range of 0.5 to 80 µm.

In another preferred embodiment, the particulate inorganic filler has a specific surface area (BET) of not more than 200 m²/g, preferably in the range of 80±78 m²/g, more preferably in the range of 80±50 m²/g, most preferably in the range of 80±20 m²/g. Alternatively, the particulate inorganic filler may either have a specific surface area in the range of 0.1 to 20 m²/g, preferably in the range of 0.5 to 8 m²/g, more preferably in the range of 0.6 to 6 m²/g, and most preferably in the range of 0.8 to 5 m²/g, or a specific surface area in the range of 20 to 200 m²/g, preferably in the range of 50 to 200 m²/g, more preferably in the range of 100 to 170 m²/g, and most preferably in the range of 140 to 160 m²/g. Preferably, the particulate inorganic filler has a specific surface area of 0.1 to 20 m²/g.

In another preferred embodiment, the particulate inorganic filler has a Mohs hardness of at least 4, preferably at least 5, more preferably at least 5.5, most preferably at least 6. The hardness of the particulate inorganic filler correlates with the hardness and scratch resistance of the solidified gelcoat composition.

In another preferred embodiment, the particulate inorganic filler has a bulk density within the range of 0.9±0.5 kg/dm³ preferably 0.9±0.3 kg/dm³.

Preferred particle size distributions are summarized as Embodiments 9 to 12 in the table here below:

| | Embodiment 9 | Embodiment 10 | Embodiment 11 | Embodiment 12 |
|---|---|---|---|---|
| Particle size distribution | D10*: 2 µm(±75%) | D10*: 2 Nm(±50%) | D10*: 2 µm(±25%) | D10*: 2 µm(±10%) |
| | D50*: 4 µm(±75%) | D50*: 4 µm(±50%) | D50*: 4 µm(±25%) | D50*: 4 µm(±10%) |
| | D90*: 9 µm(±75%) | D90*: 9 µm(±50%) | D90*: 9 µm(±25%) | D90*: 9 µm(±10%) |

| | | | | |
|---|---|---|---|---|
| * D10, D50 and D90 are the diameters where 10 wt.-%, 50 wt.-% and 90 wt.-% of the particles of the particulate inorganic filler have a smaller equivalent diameter (preferably determined with Malvern MS 2000) | | | | |

In the above table, "D10: 2 µm(±75%)" refers to a range for D10 of from 0.5 µm (= 2 µm - 75% of 2 µm) to 3.5 µm (= 2 µm + 75% of 2 µm). All ranges are to be interpreted within a certain margin known to a person skilled in the art.

Particularly preferred particulate inorganic fillers may be characterized by one of the following Embodiments 13 to 16:

| | Embodiment 13 | Embodiment 14 | Embodiment 15 | Embodiment 16 |
|---|---|---|---|---|
| Particle size distribution | D10*: 2 µm | 15µm: 100% | D10*: 80±20 nm | D10*: 60±20 nm |
| | D50*: 4 µm | 10µm: 97.6% | D50*: 150± 50 nm | D50*: 120±50 nm |
| | D90*: 9 µm | 5µm: 72.8% | D90*: 200±100nm | D90*: 150±75 nm |
| | | 3 µm: 39.7% | | |
| Specific surface area (BET) | 4.2±0.2 m²/g | 4.5±0.2 m²/g | 150±25 m²/g | 175±25 m²/g |
| Mohs hardness | 7.0±0.5 | 6.0±0.5 | 5.0 to 8.0 | 5.0 to 8.0 |
| Bulk density | 0.6±0.1 kg/dm³ | 0.6 to 1.2 kg/dm³ | 0.5 to 2.0 kg/dm³ | 0.5 to 2.0 kg/dm³ |

| | | | | |
|---|---|---|---|---|
| * D10, D50 and D90 are the diameters where 10 wt.-%, 50 wt.-% and 90 wt.-% of the particles of the particulate inorganic filler have a smaller equivalent diameter (preferably determined with Malvern MS 2000) | | | | |

In the above table, all values are to be interpreted within a certain margin known to a person skilled in the art.

In another preferred embodiment, the particulate inorganic filler has a carbon content of at most 10 wt.-%, relative to the total weight of the particulate inorganic filler, preferably at most 5 wt.-%, more preferably at most 3 wt.-%.

The low carbon content of the inorganic filler indicates that the filler is preferably not modified with organic agents such as surface treating agents. If a filler is surface treated, the particles comprise surface treatment agents attached to the surface of a core, where the surface treatment agent includes a first group attached to the surface of the core, and a second group capable of reacting with other components.

In a preferred embodiment, the particulate inorganic filler is not surface modified. Preferably, the particulate inorganic filler is not surface modified with an organic agent. Most preferably, the particulate inorganic filler is not surface modified by organic end-capping agents.

Accordingly, the particulate inorganic filler is preferably not capable of reacting with other components of the gelcoat composition such as the reactive polyester resin system.

In a preferred embodiment, the particulate inorganic filler has a carbon content of at most 10 wt.-%, relative to the total weight of the particulate filler and/or is not surface modified. Preferably, the particulate inorganic filler has a carbon content of at most 10 wt.-% relative to the total weight of the particulate filler and is not surface modified. More preferably, the particulate inorganic filler has a carbon content of at most 5 wt.-% relative to the total weight of the particulate filler and is not surface modified. Most preferably, the particulate inorganic filler has a carbon content of at most 3 wt.-% relative to the total weight of the particulate filler and is not surface modified.

In another preferred embodiment, the particulate inorganic filler comprises one or more selected from the group consisting of chopped fiberglass, milled fiberglass, magnesium silicate (talc), calcium silicate (wollastonite), aluminum silicate, alumo silicates (feldspars and zeolites), mica, clay, silicon dioxide, aluminum oxide, aluminium hydroxide, titanium dioxide, magnesium carbonate, calcium carbonate, and combinations thereof.

Alumo silicates are defined as silicates, in which a proportion of the Si⁴⁺ ions is replaced by Al³⁺, the excess negative charge being balanced by extra sodium, potassium or calcium ions. Exemplary alumosilicates include silica deficient alkali alumo silicates. An exemplary silica deficient alkali alumosilicate is nepheline, i.e. a sodium-potassium alumo silicate of the formula Na₃KAl₄Si₄O₁₆.

In a preferred embodiment, the particulate inorganic filler essentially consists of nepheline. Preferably, the particulate inorganic filler consists of more than 90 wt.-%, more preferably more than 95 wt.-% and most preferably more than 99 wt.-% nepheline.

Nepheline is, for example, commercially available under the trade name MINEX®. MINEX® contains less than one-tenth of one percent crystalline silica.

In another preferred embodiment, the particulate inorganic filler essentially consists of the elements Si and O; Al and O; or Al, Si and O. Preferably, the particulate inorganic filler essentially consists of silicon dioxide and/or aluminum oxide. More preferably, the particulate inorganic filler essentially consists of a mixture of silicon dioxide and/or aluminum oxide. Still more preferably, the particulate inorganic filler consists of a 2(±1.5) : 2(±1.5) mixture of silicon dioxide and aluminum oxide. Yet more preferably, the particulate inorganic filler consists of a 1(±0.9) : 1 (±0.9) mixture of silicon dioxide and aluminum oxide. Most preferably, the particulate inorganic filler consists of a 1(±0.5) : 1(±0.5) mixture of silicon dioxide and aluminum oxide. In particular preferred is a 1 (±0.1): 1(±0.1) mixture of silicon dioxide and aluminum oxide.

Silicon dioxide, also known as silica and quartz, has the chemical formula Si0₂. Si0₂ has a number of distinct crystalline forms (polymorphs) in addition to amorphous forms. Exemplary crystalline forms include a-quartz, β-quartz, α-tridymite, β-tridymite, α-cristoballite, β-cristobalite, faujasite, melanophlogite, keatite, moganite, stishovite, poststishovite, fibrous, seifertite. Preferred are a-quartz, α-tridymite, and α-cristoballite. More preferred are a-quartz and α-cristoballite. Most preferred is α-quartz. Exemplary amorphous forms include fused quartz, fumed silica (or pyrogenic silica), colloidal silica, silica gel, and aerogel. Preferred are fused quartz and fumed silica. Silicon dioxide naturally occurs as quartz, which is the second most abundant mineral in the Earth's continental crust, after feldspar. Silicon dioxide is, for example, commercially available under the trade name SIKRON® from Evonik and under the trade name AEROSIL® from Sibelco. SIKRON® is produced from selected silica sand with a silicon dioxide content of over 99%. AEROSIL® is a structure-modified fumed silica. AEROSIL® R 7200 having a carbon content of less than 10 wt.-% has been specifically developed for the improvement of scratch resistance in coating systems.

Aluminum oxide, also known as alumina, has the chemical formula Al₂0₃. Aluminum oxide is, for example, commercially available from the Hungarian company Magyar Aluminum in purities of about 99.5% or more and a maximum specific surface area (BET) in the range of about 1.3±0.3m²/g.

In a preferred embodiment, the particulate inorganic filler essentially consists of aluminium hydroxide of the chemical formula Al(OH)₃, also known as aluminium trihydrate. Preferably, the particulate inorganic filler consists of more than 90 wt.-%, more preferably more than 95 wt.-% and most preferably more than 99 wt.-% aluminium hyroxide.

The essential components of the particulate inorganic filler significantly influence the properties of the gelcoat composition with respect to its hardness and scratch resistance after solidification.

Furthermore, a reactive diluent is used in the gelcoat composition of the invention. Exemplary reactive diluents include styrene, alpha-methylstyrene, para-tert-butylstyrene, vinyl toluene, divinylbenzene, methyl methacrylate, diallyl phthalate, ethylene glycol dimethyacrylate, hydroxyethyl methacrylate, hydroxyethylacrylate and triallyl cyanurate. Preferably, styrene or styrene derivatives are used as the diluent. More preferably, styrene is used.

Styrene, however, is a hazardous air pollutant (HAPS) and reduction of elimination of styrene is desired. Thus, more preferably, alternative reactive diluents are used to replace some or all of the styrene in the reactive diluent component of the gelcoat composition. In a preferred embodiment, the alternative reactive diluents to be used to replace styrene are linear or branched acrylics, such as mono-, di-, and polyfunctional esters of monofunctional acids such as acrylic acid and methacrylic acid. Suitable acrylate monomers are the acrylic and methacrylic esters of linear and branched acyclic alcohols and polyols. Representative acrylate monomers include, but are not limited to, ethyl methacrylate, butyl methacrylate, butyl acrylate, hexyl acrylate, 2-ethylhexyl acrylate, lauryl acrylate, ethyl acrylate, ethylene glycol diacrylate, triethylene glycol diacrylate, tripropylene glycol diacrylate, 1,4-butanediol diacrylate and dimethacrylate, neopentyl glycol acrylate and methacrylate, 1,6-hexanediol diacrylate and dimethacrylate, 1,12-dodecanediol dimethacrylate, ethylene glycol dimethacrylate, diethylene glycol dimethacrylate, 2-ethylhexyl methacrylate, hexyl methacrylate, lauryl methacrylate, methacrylic acid, acrylonitrile, methacrylonitrile, cyanoacrylate, acrylamide and methacrylamide, polyethylene glycol diacrylate, polyethylene glycol dimethacrylate, polypropylene glycol diacrylate, polypropylene glycol dimethacrylate and combinations thereof.

The ability to replace some or all of the styrene is a function of the nature of the reactive polyester resin system. With the gel coat compositions comprising the reactive polyester resin systems described herein some or all of styrene conventionally used for making gelcoat compositions can be replaced with other types of reactive diluents.

In another preferred embodiment, a solvent is added to the diluent. Preferably, acetone is added.

In another preferred embodiment, the diluent is contained in the gelcoat composition in an amount of 0.1 to 40 wt.-%, preferably 5 to 30 wt.-%, more preferably 8 to 25 wt.-%.

In a preferred embodiment, the gelcoat composition according to the invention comprises
- a reactive polyester resin system comprising a diol selected from the group consisting of butane-1,4-diol, 2-butyl-2-ethyl-1,3-propanediol (BEPD), 1,3-butylene glycol, cyclohexane-1,2-diol, cyclohexane dimethanol, diethylenglycol, 2,2-dimethyl-1,4-butanediol, 2,2-dimethylheptanediol, 2,2-dimethyloctane-diol, 2,2-dimethylpropane-1,3-diol, dipentaerythritol, dipropylene glycol, di-trimethylol-propane, hexane-1,6-diol, 2-methyl-1,3-propanediol, 5-norbornene-2,2-dimethylol, 2,3-norbornene diol, oxa-alkanediols, pentaerythritol, polyethylene glycol, propane-3-diol, 1,2-propanediol (also called 1,2-propyleneglycol), triethyleneglycol, trimethylolpropane, tripentaerythritol, 2,2,4-trimethyl-1,3-pentanediol, and 2,2-bis(p-hydroxycyclohexyl)-propane, and a carboxylic acid, a carboxylic acid ester and/or a carboxylic acid anhydride;
- a particulate inorganic filler at a content of at least 0.001 wt.-%, relative to the total weight of the gelcoat composition; and
- a reactive diluent.

In a more preferred embodiment, the gelcoat composition according to the invention comprises
- a reactive polyester resin system comprising a diol selected from the group consisting of butane-1,4-diol, 2-butyl-2-ethyl-1,3-propanediol (BEPD), 1,3-butylene glycol, cyclohexane-1,2-diol, cyclohexane dimethanol, diethylenglycol, 2,2-dimethyl-1,4-butanediol, 2,2-dimethylheptanediol, 2,2-dimethyloctane-diol, 2,2-dimethylpropane-1,3-diol, dipentaerythritol, dipropylene glycol, di-trimethylol-propane, hexane-1,6-diol, 2-methyl-1,3-propanediol, 5-norbomene-2,2-dimethylol, 2,3-norbornene diol, oxa-alkanediols, pentaerythritol, polyethylene glycol, propane-3-diol, 1,2-propanediol (also called 1,2-propyleneglycol), triethyleneglycol, trimethylolpropane, tripentaerythritol, 2,2,4-trimethyl-1,3-pentanediol, and 2,2-bis(p-hydroxycyclohexyl)-propane, and a carboxylic acid, a carboxylic acid ester and/or a carboxylic acid anhydride;
- a particulate inorganic filler at a content of at least 0.001 wt.-%, relative to the total weight of the gelcoat composition; and
- a reactive diluent, wherein the particulate inorganic filler has a carbon content of at most 10 wt.-%, relative to the total weight of the particulate inorganic filler and/or is not surface modified.

In a still more preferred embodiment, the gelcoat composition according to the invention comprises
- a reactive polyester resin system comprising 1,2-propanediol (1,2-propylene glycol), dipropylene glycol or a combination thereof, and maleic anhydride or isophthalic acid or a combination thereof;
- a particulate inorganic filler at a content of at least 0.001 wt.-%, relative to the total weight of the gelcoat composition; and
- a reactive diluent,
wherein the particulate inorganic filler has a carbon content of at most 5 wt.-%, relative to the total weight of the particulate inorganic filler and is not surface modified.

In a preferred embodiment, the gelcoat composition further comprises one or more additives independently selected from the group consisting of promoters, accelerators, thickeners, thixotropic agents, inhibitors, air release agents, pigments, solvents, flow agents, leveling agents and dispersing aids.

Pigments used in the gelcoat composition of the invention impart color and opacity to the gelcoat composition. Examples of pigments include treated or untreated organic or inorganic pigments and mixtures thereof, such as titanium dioxide, carbon black, iron oxide black, phthalo blue, phthalo green, quinacridone magenta, LF orange, arylide red, quinacridone red, and red oxide. Pigments are used in an amount sufficient to provide an opaque cured gelcoat composition at the desired thickness level. Combinations of pigments may be used.

Promoters used in the gelcoat composition of the invention are generally any electron donating species that facilitates in the decomposition of an initiator and may also help in decomposition of any catalyst. An accelerator when used in the gelcoat composition may also have the same function. Suitable promoters include metal compounds, for example cobalt, manganese, potassium, iron, vanadium, copper and aluminum salts of organic acids and the like; amines, for example dimethylaniline, diethylaniline, phenyl diethanolamine, dimethyl paratoluidine, 2-aminopyridine and the like; amides, for example dimethyl acetoamide, diethyl acetoamide and the like; Lewis acids, for example boron fluoride dehydrate, ferric chloride and the like; bases, for example tetramethyl ammonium hydroxide and the like; quaternary ammonium salts for example trimethyl benzyl ammonium chloride, tetrakismethylol phosphonium chloride and the like; sulfur compounds, for example dodecyl mercaptan, 2-mercaptoethanol and the like; dimethyl acetoacetamide; ethyl acetoacetate; and methyl acetoacetate. Combinations of promoters and accelerators may be used.

Thixotropic agents useful in the gelcoat composition include silica compounds and/or inorganic clays. For example, the silica compounds may be selected from the group consisting of fumed silica, hydrophilic fumed silica, hydrophobic fumed silica, precipitated silica and the like and combinations thereof. Useful inorganic clays include bentonite clay, garamite clay, hectorite clay and the like and the combinations thereof.

Inhibitors, such as, free-radical inhibitors/scavengers may be included in the gelcoat composition. The inhibitors may maintain an acceptable shelf life for the composition. Examples of suitable inhibitors include quinones, for example hydroquinone, toluhydroquinone, mono-tertiary-butyl hydroquinone, di-tertiary-butyl hydroquinone, naptha-quinone, monomethyl ether hydroquinone and the like; butylated hydroxy toluene and tertiary butyl catechol, and the like. Combinations of inhibitors may be used.

Air release agents, also known as defoamers, will enhance the ability of the gelcoat composition to be free of trapped air, i.e. porosity. These agents may be silicone based or non-silicone based and includes acrylic polymer, hydrophobic solids, mineral oils and the like. Air release agents available from BYK Chemie, GmbH, Wesel, Germany ("BYK Chemie") under the designations BYK-A 500, BYK-A 501, BYK-A 515, and BYK-A 555 may be used. Combinations of air release agents may be used.

Flow and leveling agents decrease the surface tension at the surface of the cured gelcoat. Surfactants, such as silicone surfactants and/or fluorocarbon surfactants are typically used in the gelcoat compositions, methods and processes described herein. Silicone surfactants that may be used in the invention include dimethyl silicones, liquid condensation products of dimethylsilane diol, methyl hydrogen polysiloxanes, liquid condensation products of methyl hydrogen silane diols, dimethysilicones, aminopropyltriethoxysilane, methyl hydrogen polysiloxanes and the like and combinations thereof. Suitable fluorocarbon surfactants include fluorinated potassium alkyl carboxylates, fluorinated alkyl quaternary ammonium iodides, ammonium perfluoroalkyl carboxylates, fluorinated alkyl polyoxyethylene ethanol, fluorinated alkyl alkoxylates, fluorinated alkyl esters, ammonium perfluoroalkyl sulfonate and the like and combinations thereof.

Dispersing aids prevent the sedimentation of mineral fillers, such as talc, aluminum trihydrate, and the like, and the flocculation of organic and inorganic pigments. Typical dispersing aids useful in the invention are surfactant polymers, for example polyester and polysiloxane copolymers, alkylol ammonium salts, and salts of unsaturated polyamine amides and acidic polyesters and the like and combinations thereof. Dispersing aids available from BYK Chemie under the designation BYK-W 940, BYK-W 966, BYK-W 980, Disperbyk-160, or Disperbyk-170 may be used.

Other components commonly used and known in the art can optionally be present in the gelcoat composition. These components include but are not limited to biocides, suppressants to reduce VOC emissions and catalysts. Catalysts may include materials that are inert in the gelcoat composition but become active during the application process, such as radiation-activated initiators and heat activated catalysts. Alternatively, catalysts, such as free radical catalysts like peroxide catalysts or azoalkane-type catalysts, may be used with the gelcoat composition at the time of application.

The gelcoat composition can be prepared by any known means, for example by blending the reactive polyester resin system with the remaining ingredients in any convenient order.

In a preferred embodiment, the gelcoat formulations are prepared by, first, mixing, with a high speed mixer equipped with a cowles blade, the reactive polyester resin system, the reactive diluent and the additives, and after thorough mixing, secondly adding the particulate inorganic fillers, and continuing the high speed mixing for a time period of 5 to 30 minutes.

In a preferred embodiment, the gelcoat composition comprises
- 20 to 95 wt.-% of a reactive unsaturated polyester resin system comprising one or more polyols and one or more carboxylic acids and/or carboxylic acid anhydrides; 5.0 to 40 wt.-% of a particulate inorganic filler;
- 0.1 to 40 wt.-% of a reactive diluent; and
- 0 to 40 wt.-% of further additives;
relative to the total weight of the gelcoat composition.

Preferably, the gelcoat composition comprises
- the reactive unsaturated polyester resin system comprising one or more polyols and one or more carboxylic acids and/or carboxylic acid anhydrides;
- the particulate inorganic filler;
- the reactive diluent; and
- the further additives;
in amounts according to the following Embodiments 17 to 20:

| | Embodiment 17 | Embodiment 18 | Embodiment 19 | Embodiment 20 |
|---|---|---|---|---|
| Reactive polyester resin system | 20 to 70 wt.-% | 30 to 60 wt.-% | 40±5 wt.-% | 50±5 wt.-% |
| Particulate inorganic filler | 5 to 40 wt.-% | 10 to 30 wt.-% | 13±5 wt.-% | 20±5 wt.-% |
| Reactive diluent | 5 to 30 wt.-% | 8 to 25 wt.-% | 23±5 wt.-% | 10±5 wt.-% |
| Additives | 0 to 30 wt.-% | 0 to 30 wt.-% | 0 to 30 wt.-% | 0 to 30 wt.-% |

In the above table, all ranges are to be interpreted within a certain error range known to a person skilled in the art.

The invention is directed to a method for the preparation of a gelcoated substrate comprising the steps of
(a) applying a first gelcoat composition comprising
   - a reactive polyester resin system comprising a polyol and a carboxylic acid, a carboxylic acid ester and/or carboxylic acid anhydride;
   - a particulate inorganic filler at a content of at least 0.001 wt.-%, relative to the total weight of the gelcoat composition; and
   - a reactive diluent
   a substrate; wherein the substrate is a sanitary basin selected from the group consisting of sinks, washbasins, spas, shower basins and lavatories, or a surface selected from the group selected of table tops and counter tops;
(a₂) applying a second gelcoat composition differing from the gelcoat composition applied in step (a);
(b) allowing the first gelcoat composition to solidify; and
(b₂) allowing the second gelcoat composition solidify.

In a preferred embodiment, in step (a) the gelcoat composition is applied to the surface by a closed or an open mold process. In a closed mold process, the gelcoat composition is applied to the release surface of a mold corresponding to the desired final shape and surface finish of the substrate to be coated. Additional coating compositions, such as fiber reinforced resins, may then be applied to the gelcoat. After solidification, the substrate is removed from the mold and the gelcoat provides the final finished surface of the article. In an open mold process, the gelcoat composition is applied to the surface of the substrate as a wet film, which is then allowed to solidify on the surface of the article. In this process, additional coating compositions are to be applied to the surface before the gelcoat composition in order to obtain the gelcoat as the final finished surface of the article. Preferably, the gelcoat composition is applied to the surface by an open mold process by any one of a number of techniques selected from the group consisting of brushing, hand lay-up, or spraying. Still more preferably, the gelcoat composition is applied by spraying. Most preferably, the gelcoat composition is applied by atomized spray application with a spray gun. Atomizing the gelcoat composition describes breaking the fluid stream into fine aerosol particle sizes, which converts the narrow high velocity stream into a lower velocity shaped spray pattern as it exits the spray gun fluid tip.

In another preferred embodiment, the gelcoat composition is allowed to solidify at a temperature of 0 to 100°C, preferably at a temperature of 10 to 40 °C, more preferably at room temperature.

In another preferred embodiment, the gelcoat composition is post-cured at a temperature of 50 to 100°C, preferably at a temperature of 60 to 90 °C, for a time period of 1 to 24 h, preferably 2 to 5 h.

In another preferred embodiment, the solidification can be promoted through the use of free radical polymerization initiators. For example, azo-type initiators such as 2,2'-azobis(2-methylpropionitrile) and peroxo initiators such as benzoyl peroxide or methyl ethyl ketone peroxide are used. Preferably, methyl ethyl ketone peroxide is used. Methyl ethyl ketone peroxide is for example available from Akzo under the trade name Butanox M-50.

In another preferred embodiment, a strengthening plastic support, optionally fiber-reinforced, can be applied to the solidified gelcoat composition using any one of a number of techniques selected from the group consisting of brushing, hand lay-up, or spraying for open mold processes, or by casting for closed mold processes, and the resulting laminate structure is cured and demolded.

In another preferred embodiment, the method provides a gelcoated substrate with a gelcoat thickness of 0.1 to 2.0 mm, preferably 0.2 to 1.5 mm, more preferably 0.4 to 1.0 mm and most preferably 0.6 to 0.8 mm. A too thin gelcoat film will not cure completely since a high proportion of the diluent will evaporate and there will not be enough left for the crosslinking reaction. A too thick gelcoat film can cause cracks, shrinkage and pre-release.

The gelcoat according to the invention has utility in any application in which hardness and/or scratch resistance is necessary or desired.

Preferred substrates include boat bottoms or hulks where the gelcoat according to the invention can serve the purpose of preventing growth of algae and/or bacteria. Other preferred substrates include covers, encasements, housings, containers, casings, boxes, shelves, frameworks, racks, and similar articles that typically require regular washing and/or that are typically exposed to weather such as roof boxes for automobiles; caravans, trailer parts, sun roofs, hales, wind turbine blades, and the like. The gelcoat according to the invention can serve the purpose of preventing abrasion due to e.g. dust and ice crystals in air.

While the above applications typically require that the gelcoat according to the invention be applied to the outer (exterior) surface of the substrates, it is also possible to cover inner (interior) surfaces of articles with the gelcoat according to the invention such as bottles, containers and other means typically used to store or transport solids, liquids or gases.

The substrate is a sanitary basin selected from the group consisting of sinks, washbasins, spas, shower basins, and lavatories, or a surface selected from the group consisting of table tops, and counter tops. Preferably, the substrate is a sanitary basin selected from the group consisting of sinks, washbasins, spas, shower basins, and lavatories.

The method for the preparation of a gelcoated substrate comprises the steps of
(a) applying a first gelcoat composition comprising
   - a reactive polyester resin system comprising a polyol and a carboxylic acid, a carboxylic acid ester and/or carboxylic acid anhydride;
   - a particulate inorganic filler at a content of at least 0.001 wt.-%, relative to the total weight of the gelcoat composition; and
   - a reactive diluent
   to a substrate; wherein the substrate is a sanitary basin selected from the group consisting of sinks, washbasins, spas, shower basins and lavatories, or a surface selected from the group selected of table tops and counter tops;
(b) allowing the first gelcoat composition to solidify;
(a₂) applying a second gelcoat composition differing from the gelcoat composition applied in step (a); and
(b₂) allowing the second gelcoat composition to solidify.

Preferably, the gelcoat composition applied in step (a) provides a harder and less flexible gelcoat than the second gelcoat composition applied in step (a2). More preferably, the second gelcoat composition applied in step (a2) forms a layer between the substrate and the gelcoat composition applied in step (a) forming the final finished surface of the article. Due to this arrangement of the gelcoat compositions, a high scratch resistance of the gelcoated surface can be obtained by the gelcoat composition applied in step (a), but a high brittleness, which is the consequence of the hardness of the solidified gelcoat composition applied in step (a), is avoided by the second gelcoat composition applied in step (a2), which provides a less hard and more flexible gelcoat than the gelcoat composition applied in step (a) when solidified. Still more preferably, the layer formed by the second gelcoat composition applied in step (a2) is thicker than the layer formed by the gelcoat composition applied in step (a). Most preferably, the layer formed by the second gelcoat composition applied in step (a2) has a thickness of 0.2 to 3.0 mm, preferably 0.3 to 2.0 mm, more preferably 0.5 to 1.2 mm and most preferably 0.8 to 1.0 mm, and the layer formed by the gelcoat composition applied in step (a) has a thickness of about 0.1 to 2.0 mm, preferably 0.1 to 1.0 mm, more preferably 0.1 to 0.8 mm and most preferably 0.1 to 0.5 mm. Thus, the method provides a gelcoated substrate with a two layer gelcoat having a thickness of 0.3 to 5.0 mm, preferably 0.4 to 3.0 mm, more preferably 0.6 to 2.0 mm and most preferably 0.9 to 1.5 mm.

In another preferred embodiment, the quantity of the gelcoat composition applied in step (a) per surface area of substrate is less than the quantity of the second gelcoat composition applied in step (a2) per surface area of substrate. Preferably, the quantity of the gelcoat composition applied in step (a) per surface area of substrate is 1 to 80% of the quantity of the second gelcoat composition applied in step (a2), more preferably 5 to 40%, even more preferably 10 to 30%, and most preferably 20 to 25%.

Preferably, step (a2) is performed before, simultaneously with and/or after step (a). Preferably, step (a2) is performed before or after step (a) depending on the process of applying the gelcoat compositions to the substrate.

In a preferred embodiment, a closed mold process is used, wherein step (a2) has to be performed after step (a) in order to form a layer of the second gelcoat composition between the substrate and the gelcoat composition applied in step (a). Preferably, step (a2) is performed immediately after step (a), i.e. "wet-on-wet", without letting the gelcoat composition applied in step (a) to solidify. That means that step (b) and step (b2) have to be performed simultaneously. More preferably, not only steps (b) and (b2), but also steps (a) and (a2) are performed simultaneously by employing two spray-guns at the same time.

In a preferred embodiment, an open mold process is performed, wherein step (a2) has to be performed before step (a) in order to form a layer of the second gelcoat composition between the substrate and the gelcoat composition applied in step (a). Preferably, step (a2) is performed before step (a), wherein the second gelcoat composition is applied by any one of a number of techniques selected from the group consisting of brushing, hand lay-up, or spraying. More preferably, step (a2) is performed before step (a), wherein the second gelcoat composition is applied by spraying. Most preferably, step (a2) is performed before step (a) in, wherein the second gelcoat composition is applied by atomized spray application with a spray gun.

In another preferred embodiment, an open mold process is performed, wherein the second gelcoat composition applied in step (a2) is allowed to solidify before the gelcoat composition of step (a) is applied. Preferably, the second gelcoat composition applied in step (a2) is allowed to solidify at a temperature of 0 to 100°C, preferably at a temperature of 10 to 40 °C, more preferably at room temperature.

In another preferred embodiment, an open mold process is performed, wherein the solidification of the second gelcoat composition applied in step (a₂) can be promoted through the use of free radical polymerization initiators. For example, azo-type initiators such as 2,2'-azobis(2-methylpropionitrile) and peroxo initiators such as benzoyl peroxide or methyl ethyl ketone peroxide are used. Preferably, methyl ethyl ketone peroxide is used. Methyl ethyl ketone peroxide is for example available from Akzo under the trade name Butanox M-50.

In another preferred embodiment, the second gelcoat composition applied in step (a₂) comprises a reactive resin system and a reactive diluent. Preferably, the reactive resin system is a crosslinkable resin. More preferably, the reactive resin system is soluble in the reactive diluents and capable of reacting with the reactive diluents to form a copolymerized network.

Exemplary reactive resin systems include ethylenically unsaturated polyester resin systems, such as unsaturated polyester systems and vinyl ester systems, and acrylates, such as urethane acrylates. Preferably, unsaturated polyester systems are used as reactive resin systems. More preferably, the unsaturated polyester system is a condensation product of polycarboxylic acids and/or polycarboxylic acid anhydrides with one or more polyols. Most preferably, the unsaturated polyester system is a condensation product of maleic anhydride and/or isophthalic acid and 1,2-propylene glycol, 1,2-propanediol and/or dipropyplene glycol.

Exemplary reactive diluents include styrene, alpha-methylstyrene, vinyl toluene, divinylbenzene, methyl methacrylate, diallyl phthalate, ethylene glycol dimethyacrylate, hydroxyethyl methacrylate, hydroxyethylacrylate and triallyl cyanurate. Preferably, styrene is used as the diluent.

In another preferred embodiment, the second gelcoat composition applied in step (a₂) further comprises a particulate inorganic filler, which is comprised in a lower amount than in the gelcoat composition applied in step (a), and/or which is less hard (Mohs hardness) than the particulate inorganic filler comprised in the gelcoat composition applied in step (a). Preferably, the second gelcoat composition comprises a particulate inorganic filler causing the resulting coating to be more flexible after curing than the gelcoat composition applied in step (a). More preferably, the second gelcoat composition applied in step (a₂) is capable of absorbing shock when applied between the substrate and the gelcoat composition applied in step (a), thereby decreasing brittleness of the solidified gelcoat.

Exemplary, the particulate inorganic filler comprises one or more selected from the group consisting of chopped fiberglass, milled fiberglass, magnesium silicate (talc), calcium silicate (wollastonite), aluminum silicate, alumo silicates (feldspars and zeolites), mica, clay, silicon dioxide, aluminum oxide, aluminium hydroxide, titanium dioxide, magnesium carbonate, calcium carbonate, and combinations thereof.

The invention is also directed to the use of the gelcoat composition according to the invention for providing a gelcoat to the surface of a substrate. Preferably, the gelcoat composition is used in combination with a second gelcoat composition. More preferable, the second gelcoat composition is less hard and more flexible than the gelcoat composition of the invention, which is harder in order to provide a high scratch resistance of the surface. Most preferable the second gelcoat composition forms a layer between the surface and the gelcoat composition of the invention.

The invention is also directed to a gelcoated substrate obtainable by the method according to any of claims 1 to 10.

In a preferred embodiment, the gelcoated substrate is further laminated with a polyester resin and a compatible chopped strand mat. The polyester resin is preferably an unsaturated polyesterresin based on phthalic acid. The chopped strand mat is preferably a glass fiber mat. The laminate may be cured overnight, and thereafter postcured in an oven at about 40 to 100°C for 24 hours.

In another preferred embodiment, the gelcoated substrate is further processed with by casting. The casting material is preferably cultured marble or cast marble.

The obtained gelcoated substrates according to the invention exhibit an excellent scratch resistance without being brittle. The scratch resistance can be measured by steel wool abrasion, sand abrasion under weight and/or mild sand blast abrasion. The brittleness can be determined by a thermal shock test.

The following examples further describe the invention, but are not to be construed as limiting its scope.

### Example 1

Gelcoat compositions, having the compositions set forth in Table 1 were prepared for this example. All amounts in Table 1 are in weight percent based on the total weight of the gelcoat composition, except where noted.

**Table 1: Gelcoat compositions**

| **Formulation 1** | | | **Formulation 2** | |
|---|---|---|---|---|
| | % | | | % |
| Aropol D1691 | 49.5 | | Aropol D 1691 | 40.6 |
| 8% copper naphthenate | 0.01 | | Silicone defoamer | 0.4 |
| Silicone defoamer | 0.4 | | Polymeric dispersant | 0.5 |
| Polymeric dispersant | 0.5 | | Titanium dioxide pigment | 13.8 |
| Sikron M600 quarz | 20 | | Aerosil R7200 nanosilica* | 13.8 |
| Titanium dioxide pigment | 15 | | Styrene | 23.0 |
| Precipitated silica | 1.8 | | 10% cobalt octoate | 0.1 |
| Amorphous fumed silica | 0.5 | | Accelerator | 0.1 |
| Styrene | 9.5 | | acetone | 7.7 |
| 10% cobalt octoate | 0.2 | | | **100.0** |
| 21% cobalt naphthenate | 0.04 | | | |
| Accelerator | 0.1 | | *alternatively: | |
| Inhibitor solution | 0.04 | | alumina based nano filler | |
| Silicone free defoamer | 0.4 | | | |
| acetone | 2 | | | |
| | **100.0** | | | |

Formulation 1 comprises 49.5 wt.-% of the reactive polyester resin system Aropol D 1691 diluted in 9.5 wt.-% styrene, and 20.0 wt.-% of the particulate inorganic filler Sikron M 600. Formulation 2 comprises 40.6 wt.-% of the reactive polyester resin system Aropol D 1691 diluted in 23.0 wt.-% styrene, and 13.8 wt.-% of the particulate inorganic nanofiller Aerosil R7200.

The gelcoat formulations were prepared by, first, mixing, with a high speed mixer equipped with a cowles blade, the reactive polyester resin system, the reactive diluent and the additives. After thorough mixing, the particulate inorganic fillers were added and the high speed mixing continued for a time period of 20 minutes.

### Example 2

### Example 2 (Comparative)

Gelcoated substrates using one of the two gelcoat formulations 1 or 2 of Example 1 were prepared for this comparative example.

One of the gelcoat formulation 1 or 2 of Example 1 was sprayed onto a glass plate, which had been treated with methyl ethyl ketone peroxide, at a thickness of 500 µm. The gelcoat formulation was cured for several hours at room temperature. After that the gelcoated substrate was laminated with a polyester resin (e.g. AROPOL M 105 TA) and a compatible chopped strand mat of a unit weight of 300 to 450 g/m², then the laminate was cured overnight, and thereafter the laminated system was postcured in an oven at 50°C for 24 hours. The laminated coating was removed from the glass plate for analysis.

### Comparative Example 1

Gelcoated substrates using a conventional gelcoat formulation such as MAXGUARD GN or ENGUARD GE were prepared for this example.

The conventional gelcoat formulation was sprayed onto a glass plate, which had been treated with methyl ethyl ketone peroxide, at a thickness of 500 µm. The gelcoat formulation was cured for several hours at room temperature. After that the gelcoated substrate was laminated with a polyester resin (e.g. AROPOL M 105 TA) and a compatible chopped strand mat of a unit weight of 300 to 450 g/m², then the laminate was cured overnight, and thereafter the laminated system was postcured in an oven at 50°C for 24 hours. The laminated coating was removed from the glass plate for analysis.

### Example 3 (Comparative)

The gelcoated substrates obtained by using one of the two gelcoat formulations 1 or 2 in Comparative Example 2 are tested and compared to gelcoated substrates obtained by using the conventional gelcoat formulation in Comparative Example 1. A convenient laboratory method used to evaluate surface resistance against scratches, is the mild sand blast abrasion test: For this test, pieces of laminated gelcoats having a size of 4 cm x 4 cm were placed and fixed (glued) inside a metal can wall. The metal can was half filled with natural sand having a grain size of 0.1 to 0.6 mm. The start gloss value was measured by a glossmeter, then the metal can was shaken in a paint shaker in 30 second steps, and after each step the decreased gloss value was recorded.

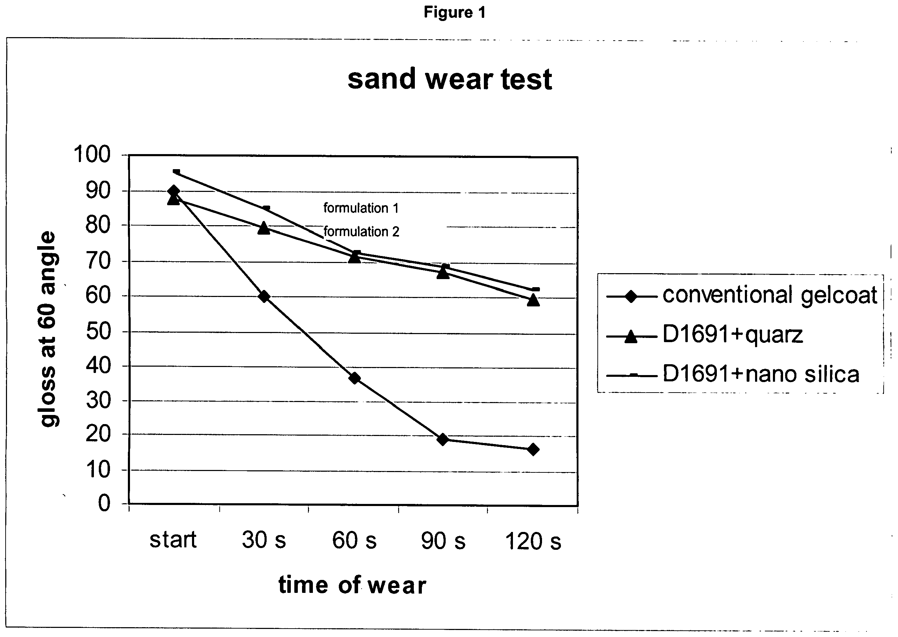

The results of the mild sand blast (wear) test can be taken from Figure 1. The slower the gloss is decreased the better is the mechanical durability, i.e. scratch resistance. It is obvious from Figure 1 that the gelcoated substrates obtained by using one of the two gelcoat formulations 1 or 2 according to the invention have a superior surface resistance against scratches to conventionally gelcoated substrates.

### Example 4

Gelcoated substrates comprising one of the two gelcoat formulations 1 or 2 of Example 1 in combination with the conventional gelcoat formulation already applied in Comparative Example 1 were prepared for this example.

A closed mold process was performed. First, one of the gelcoat formulations 1 or 2, and methyl ethyl ketone peroxide were applied to the release surface of a mold at a thickness of about 500 µm with a spray-gun. Immediately afterwards, the conventional gelcoat formulation was applied "wet-on-wet" at a thickness of about 500 µm with another spray-gun. The gelcoat formulations were cured for several hours at room temperature, and postcured in an oven at 50°C for 24 hours. After demolding the gelcoat formulation 1 or 2 was the top surface.

### Example 5

Gelcoated substrates comprising one of the two gelcoat formulations 1 or 2 of Example 1 in combination with the conventional gelcoat formulation already applied in Comparative Example 1 were prepared for this example.

A closed mold process was performed. First, one of the gelcoat formulations 1 or 2, and methyl ethyl ketone peroxide were applied to the release surface of a mold at a thickness of about 200 µm with a spray-gun. Immediately afterwards, the conventional gelcoat formulation was applied "wet-on-wet" at a thickness of about 800 µm with another spray-gun. The gelcoat formulations were cured for several hours at room temperature, and postcured in an oven at 50°C for 24 hours. After demolding the gelcoat formulation 1 or 2 was the top surface.

### Example 6

The gelcoated substrates obtained according to Example 4 and 5 were tested and compared to the gelcoated substrates obtained according to Example 2 as well as to the gelcoated substrates according to comparative Example 1. The brittleness of the substrates was determined by a thermal shock test according to ANSI Z 124.6 or similar shock tests. As indicated by passing the thermal shock test, the gelcoated substrates obtained according to the invention were less brittle than substrates with conventional gelcoats. Furthermore, the double layer gelcoated substrates of Examples 4 and 5 are even less brittle than mono layer gelcoated substrates of Example 2.

## Claims

1. A method for the preparation of a gelcoated substrate comprising the steps of
(a) applying a first gelcoat composition comprising
- a reactive polyester resin system comprising a polyol and a carboxylic acid, a carboxylic acid ester and/or a carboxylic acid anhydride;
- a particulate inorganic filler at a content of at least 0.001 wt.-%, relative to the total weight of the gelcoat composition; and
- a reactive diluent;
to a substrate; wherein the substrate is a sanitary basin selected from the group consisting of sinks, washbasins, spas, shower basins, and lavatories, or a surface selected from the group consisting of table tops and counter tops;
(a₂) applying a second gelcoat composition differing from the gelcoat composition applied in step (a);
(b) allowing the first gelcoat composition to solidify; and
(b₂) allowing the second gelcoat composition to solidify.

2. The method according to claim 1, wherein in the first gelcoat composition
- the polyol is selected from aliphatic and aromatic polyols; and
- the carboxylic acid, carboxylic acid ester and/or carboxylic acid anhydride are/is selected from aliphatic and aromatic polycarboxylic acids and the esters and anhydrides thereof.

3. The method according to claim 1 or 2, wherein in the first gelcoat composition the particulate inorganic filler has a carbon content of at most 10 wt.-%, relative to the total weight of the particulate inorganic filler, and/or has a specific surface area of not more than 200 m²/g.

4. The method according to any of the preceding claims, wherein the first gelcoat composition further comprises one or more additives independently selected from the group consisting of promoters, accelerators, thickeners, thixotropic agents, inhibitors, air release agents, pigments, solvents, flow agents, leveling agents and dispersing aids.

5. The method according to any of the preceding claims, wherein in step (a) the gelcoat composition is applied by spraying.

6. The method according to any of the preceding claims, wherein the quantity of the gelcoat composition applied in step (a) per surface area of substrate is less than the quantity of the second gelcoat composition applied in step (a₂) per surface area of substrate.

7. The method according to any of the preceding claims, wherein step (a₂) is performed before, simultaneously with and/or after step (a).

8. The method according to any of the preceding claims, wherein in step (a₂) the second gelcoat composition is applied by spraying.

9. The method according to any of the preceding claims, wherein the second gelcoat composition applied in step (a₂) comprises a reactive resin system and a reactive diluent.

10. The method according to any of the preceding claims, wherein the second gelcoat composition applied in step (a₂) further comprises a particulate inorganic filler, which is comprised in a lower amount than in the gelcoat composition applied in step (a), and/or which is less hard than the particulate inorganic filler comprised in the gelcoat composition applied in step (a).

11. A gelcoated substrate obtainable by the method according to any of claims 1 to 10.

## Patentansprüche

1. Verfahren zur Herstellung eines mit einem Gelcoat versehenen Substrats, das folgende Schritte umfasst:
(a) Aufbringen einer ersten Gelcoatzusammensetzung, umfassend
- ein reaktives Polyesterharzsystem, das ein Polyol und eine Carbonsäure, einen Carbonsäureester und/oder ein Carbonsäureanhydrid umfasst;
- einen teilchenförmigen anorganischen Füllstoff in einem Gehalt von mindestens 0,001 Gew.-%, bezogen auf das Gesamtgewicht der Gelcoatzusammensetzung; und
- ein reaktives Verdünnungsmittel;
auf ein Substrat; wobei es sich bei dem Substrat um ein Sanitärbecken aus der Gruppe bestehend aus Spülbecken, Waschbecken, Whirlpools, Duschbecken und Toiletten oder eine Oberfläche aus der Gruppe bestehend aus Tischplatten und Arbeitsplatten handelt;
(a₂) Aufbringen einer zweiten Gelcoatzusammensetzung, die von der in Schritt (a) aufgebrachten Gelcoatzusammensetzung verschieden ist;
(b) Festwerdenlassen der ersten Gelcoatzusammensetzung; und
(b₂) Festwerdenlassen der zweiten Gelcoatzusammensetzung.

2. Verfahren nach Anspruch 1, bei dem in der ersten Gelcoatzusammensetzung
- das Polyol aus aliphatischen und aromatischen Polyolen ausgewählt ist; und
- die Carbonsäure, der Carbonsäureester und/oder das Carbonsäureanhydrid aus aliphatischen und aromatischen Polycarbonsäuren und den Estern und Anhydriden davon ausgewählt sind/ist.

3. Verfahren nach Anspruch 1 oder 2, bei dem in der ersten Gelcoatzusammensetzung der teilchenförmige anorganische Füllstoff einen Kohlenstoffgehalt von höchstens 10 Gew.-%, bezogen auf das Gesamtgewicht des teilchenförmigen anorganischen Füllstoffs, und/oder eine spezifische Oberfläche von höchstens 200 m²/g aufweist.

4. Verfahren nach einem der vorhergehenden Ansprüche, bei dem die erste Gelcoatzusammensetzung ferner ein oder mehrere Additive, die unabhängig aus der Gruppe bestehend aus Promotoren, Beschleunigern, Verdickern, Thixotropiermitteln, Inhibitoren, Entlüftungsmitteln, Pigmenten, Lösungsmitteln, Fließmitteln, Verlaufmitteln und Dispergierhilfen ausgewählt sind, umfasst.

5. Verfahren nach einem der vorhergehenden Ansprüche, wobei in Schritt (a) die Gelcoatzusammensetzung durch Sprühen aufgebracht wird.

6. Verfahren nach einem der vorhergehenden Ansprüche, bei dem die in Schritt (a) aufgebrachte Menge der Gelcoatzusammensetzung pro Flächeneinheit des Substrats kleiner ist als die in Schritt (a₂) aufgebrachte Menge der zweiten Gelcoatzusammensetzung pro Flächeneinheit des Substrats.

7. Verfahren nach einem der vorhergehenden Ansprüche, bei dem Schritt (a₂) vor, gleichzeitig mit und/oder nach Schritt (a) durchgeführt wird.

8. Verfahren nach einem der vorhergehenden Ansprüche, bei dem in Schritt (a₂) die zweite Gelcoatzusammensetzung durch Sprühen aufgebracht wird.

9. Verfahren nach einem der vorhergehenden Ansprüche, bei dem die in Schritt (a₂) aufgebrachte zweite Gelcoatzusammensetzung ein reaktives Harzsystem und ein reaktives Verdünnungsmittel umfasst.

10. Verfahren nach einem der vorhergehenden Ansprüche, bei dem die in Schritt (a₂) aufgebrachte zweite Gelcoatzusammensetzung ferner einen teilchenförmigen anorganischen Füllstoff umfasst, der in einer kleineren Menge als in der in Schritt (a) aufgebrachten Gelcoatzusammensetzung enthalten ist und/oder weniger hart als der in der in Schritt (a) aufgebrachten Gelcoatzusammensetzung enthaltene teilchenförmige anorganische Füllstoff ist.

11. Mit einem Gelcoat versehenes Substrat, das durch das Verfahren nach einem der Ansprüche 1 bis 10 erhältlich ist.

## Revendications

1. Procédé de préparation d'un substrat revêtu d'enduit gélifié comprenant les étapes de
(a) application d'une première composition d'enduit gélifié comprenant
- un système de résine polyester réactive comprenant un polyol et un acide carboxylique, un ester d'acide carboxylique et/ou un anhydride d'acide carboxylique ;
- une charge inorganique particulaire à une teneur d'au moins 0,001 % en poids, par rapport au poids total de la composition d'enduit gélifié ; et
- un diluant réactif ;
sur un substrat ; le substrat étant un bassin de sanitaire choisi dans le groupe constitué d'éviers, lavabos, baignoires, bacs de douche et toilettes, ou une surface choisie dans le groupe constitué de dessus de table et de comptoirs ;
(a₂) application d'une deuxième composition d'enduit gélifié différente de la composition d'enduit gélifié appliquée dans l'étape (a) ;
(b) solidification de la première composition d'enduit gélifié ; et
(b2) solidification de la deuxième composition d'enduit gélifié.

2. Procédé selon la revendication 1, dans lequel, dans la première composition d'enduit gélifié le polyol est choisi parmi des polyols aliphatiques et aromatiques ; et
l'acide carboxylique, ester d'acide carboxylique et/ou anhydride d'acide carboxylique sont/est choisi(s) parmi des acides polycarboxyliques aliphatiques et aromatiques et les esters et anhydrides de ceux-ci.

3. Procédé selon la revendication 1 ou 2, dans lequel, dans la première composition d'enduit gélifié, la charge inorganique particulaire a une teneur en carbone d'au plus 10 % en poids par rapport au poids total de la charge inorganique particulaire, et/ou a une surface spécifique de pas plus de 200 m²/g.

4. Procédé selon l'une quelconque des revendications précédentes, dans lequel la première composition d'enduit gélifié comprend en outre un ou plusieurs additifs indépendamment choisis dans le groupe constitué de promoteurs, accélérateurs, agents épaississants, agents thixotropes, inhibiteurs, agents de libération d'air, pigments, solvants, agents de fluidité, agents diluants et adjuvants de dispersion.

5. Procédé selon l'une quelconque des revendications précédentes, dans lequel, dans l'étape (a), la composition d'enduit gélifié est appliquée par pulvérisation.

6. Procédé selon l'une quelconque des revendications précédentes, dans lequel la quantité de la composition d'enduit gélifié appliquée dans l'étape (a) par aire de surface de substrat est inférieure à la quantité de la deuxième composition d'enduit gélifié appliquée dans l'étape (a₂) par aire de surface de substrat.

7. Procédé selon l'une quelconque des revendications précédentes, dans lequel l'étape (a₂) est conduite avant, simultanément avec et/ou après l'étape (a).

8. Procédé selon l'une quelconque des revendications précédentes, dans lequel, dans l'étape (a₂), la deuxième composition d'enduit gélifié est appliquée par pulvérisation.

9. Procédé selon l'une quelconque des revendications précédentes, dans lequel la deuxième composition d'enduit gélifié appliquée dans l'étape (a₂) comprend un système de résine réactive et un diluant réactif.

10. Procédé selon l'une quelconque des revendications précédentes, dans lequel la deuxième composition d'enduit gélifié appliquée dans l'étape (a₂) comprend en outre une charge inorganique particulaire, qui est comprise en une quantité plus faible que dans la composition d'enduit gélifié appliquée dans l'étape (a), et/ou qui est moins dure que la charge inorganique particulaire comprise dans la composition d'enduit gélifié appliquée dans l'étape (a).

11. Substrat revêtu d'enduit gélifié pouvant être obtenu par le procédé selon l'une quelconque des revendications 1 à 10.
